# EUROPEAN PATENT APPLICATION

(11) **EP 4 231 571 A1**
(43) Date of publication of application: **23.08.2023**
(21) Application number: 21879526.8
(22) Date of filing: 15.10.2021
(51) Int. Cl.: H04L 5/00

(54) **METHOD, APPARATUS, AND DEVICE FOR COMMUNICATION**

(30) Priority: 15.10.2020 CN 202011105723
(71) Applicant: Spreadtrum Communications (Shanghai) Co., Ltd., Shanghai 201203 (CN)
(72) Inventor: ZHANG, Meng, Shanghai 201203 (CN)
(74) Representative: Vossius & Partner Patentanwälte Rechtsanwälte mbB
(86) International application number: PCT/CN2021/124002
(87) International publication number: WO 2022/078485

(57) **Abstract**

Embodiments of the present application provide a communication method and apparatus, and a device. The method includes: a terminal device acquires first information, where the first information is used to indicate an association relationship of physical downlink control channels (PDCCH) transmitted by N transmission-reception points, and the N is an integer greater than or equal to 2; and the terminal device receives the PDCCHs based on the first information. The success rate of receipt of the PDCCH by the terminal device is improved.

## Description

This application claims priority to Chinese patent application No. 202011105723.X, filed to the China National Intellectual Property Administration on October 15, 2020, and entitled "Communication Method and Apparatus, and Device", the disclosure of which is incorporated by reference in its entirety.

### TECHNICAL FIELD

The present invention relates to communication technologies and, in particular, to a communication method and apparatus, and a device.

### BACKGROUND

A network device can transmit a physical downlink control channel (physical downlink control channel, PDCCH) to a terminal device, and the PDCCH can carry control information to schedule the terminal device for data transmission.

In a multi-transmission-reception point (multi-transmission receiving point, M-TRP) communication scenario, multiple TRPs (network device) can transmit the same PDCCH to the terminal device, so that the terminal device can jointly decode the same multiple PDCCHs, to increase the probability of successful receipt of the PDCCH. However, in a practical application process, after the terminal device receives multiple PDCCHs, the terminal device cannot determine which PDCCHs are the same, resulting in the terminal device being unable to jointly decode the same multiple PDCCHs, causing a low success rate of receipt of the PDCCH by the terminal device.

### SUMMARY

Embodiments of the present application provide a communication method and apparatus, and a device. The success rate of receipt of PDCCH by a terminal device is improved.

In a first aspect, an embodiment of the present application provides a communication method, including:
acquiring, by a terminal device, first information, where the first information is used to indicate an association relationship of physical downlink control channels (PDCCH) transmitted by N transmission-reception points, and the N is an integer greater than or equal to 2;
receiving, by the terminal device, the PDCCHs based on the first information.

In a possible implementation, the first information is used to indicate at least one of the following information:
an association relationship between different search spaces; or,
an association relationship between different PDCCH candidate sets; or,
an association relationship between different PDCCH candidates.

In a possible implementation, the N transmission-reception points correspond to a same frequency domain resource set, and different transmission-reception points correspond to different PDCCH candidate sets; and
the first information is used to indicate an association relationship between different PDCCH candidate sets.

In a possible implementation, the N transmission-reception points include a first transmission-reception point and a second transmission-reception point, the first transmission-reception point corresponds to a first PDCCH candidate set, and the second transmission-reception point corresponds to a second PDCCH candidate set;
the first information is used to indicate an association relationship between the first PDCCH candidate set and the second PDCCH candidate set.

In a possible implementation, the first information is used to indicate that there is an association relationship between an i-th PDCCH in the first PDCCH candidate set and an i-th PDCCH in the second PDCCH candidate set;
where the i is less than or equal to a number of PDCCHs included in the first PDCCH candidate set, and the i is less than or equal to a number of PDCCHs included in the second PDCCH candidate set.

In a possible implementation, the N transmission-reception points correspond to a same frequency domain resource set;
the first information is used to indicate that there is an association relationship between different PDCCH candidates in a same aggregation level.

In a possible implementation, multiple search spaces correspond to a same frequency domain resource set;
the first information is used to indicate that there is an association relationship between PDCCHs in at least two search spaces.

In a possible implementation, the multiple search spaces include a first search space and a second search space, the first search space includes *M*₁ PDCCH candidate sets in a period, the second search space includes *M*₂ PDCCH candidate sets in a period;
the first information is used to indicate that there is an association relationship between an i-th PDCCH candidate set in the first search space and an i-th PDCCH candidate set in the second search space, i ≤ *M*₁, and i ≤ *M*₂.

In a possible implementation, in time domain, the *M*₁ PDCCH candidate sets are arranged sequentially, and the *M*₂ PDCCH candidate sets are arranged sequentially.

In a possible implementation, one search space is associated with at least two frequency domain resource sets;
the first information is used to indicate that there is an association relationship between PDCCHs corresponding to the at least two frequency domain resource sets.

In a possible implementation, different control resource sets (CORESET) are frequency division multiplexing (FDM); the at least two frequency domain resource sets include a first frequency domain resource set and a second frequency domain resource set, where the first frequency domain resource set corresponds to a first PDCCH candidate set, and the second frequency domain resource set corresponds to a second PDCCH candidate set; and
the first information is used to indicate that there is an association relationship between PDCCH candidates in the first PDCCH candidate set and PDCCH candidates in the second PDCCH candidate set.

In a possible implementation, the first information is used to indicate that there is an association relationship between an i-th PDCCH candidate in the first PDCCH candidate set and an i-th PDCCH candidate in the second PDCCH candidate set, the i is a positive integer less than or equal to P, and the P is a number of PDCCH candidates included in the search space.

In a possible implementation, the first PDCCH candidate set includes Q first PDCCH candidate sub-sets, and the second PDCCH candidate set includes Q second PDCCH candidate sub-sets; and
the first information is used to indicate that there is an association relationship between an i-th first PDCCH candidate sub-set in the first PDCCH candidate set and an i-th second PDCCH candidate sub-set in the second PDCCH candidate set.

In a possible implementation, the at least two frequency domain resource sets include a first frequency domain resource set and a second frequency domain resource set, the first frequency domain resource set corresponds to T first PDCCH candidate sets, the second frequency domain resource set corresponds to T second PDCCH candidate sets, and the T is an integer greater than or equal to 1; and
the first information is used to indicate that there is an association relationship between an i-th first PDCCH candidate set in the T first PDCCH candidate sets and an i-th second PDCCH candidate set in the T second PDCCH candidate sets, and the i is a positive integer less than or equal to the T.

In a possible implementation, the i-th first PDCCH candidate set includes S PDCCH candidates, and the i-th second PDCCH candidate set includes S PDCCH candidates, the S is an integer greater than or equal to 1; and
the first information is further used to indicate that there is an association relationship between a j-th PDCCH candidate in the i-th first PDCCH candidate set and a j-th PDCCH candidate in the i-th second PDCCH candidate set, and the j is an integer less than or equal to the S.

In a possible implementation, a first search space is associated with a first frequency domain resource set, and a second search space is associated with a second frequency domain resource set; and
the first information is used to indicate that there is an association relationship between PDCCH candidates in the first search space and PDCCH candidates in the second search space.

In a possible implementation, a period of the first search space includes *K*₁ PDCCH candidate sets, a period of the second search space includes *K*₂ PDCCH candidate sets, the *K*₁ is an integer greater than or equal to 1, and the *K*₂ is an integer greater than or equal to 1; and
the first information is used to indicate that there is an association relationship between an i-th PDCCH candidate set in the *K*₁ PDCCH candidate sets and an i-th PDCCH candidate set in the *K*₂ PDCCH candidate sets, i ≤ *K*₁, and i ≤ *K*₂.

In a possible implementation, in time domain, the *K*₁ PDCCH candidate sets are arranged sequentially, and the *K*₂ PDCCH candidate sets are arranged sequentially.

In a possible implementation, the first information is used to indicate that there is an association relationship between a first PDCCH candidate set in the first search space and a second PDCCH candidate set in the second search space; and
where, in time domain, the second PDCCH candidate set is a PDCCH candidate set closest to the first PDCCH candidate set and after the first PDCCH candidate set.

In the second aspect, an embodiment of the present application provides a communication apparatus, including a processing module and a receiving module, where,
the processing module is configured to acquire first information, where the first information is used to indicate an association relationship of physical downlink control channels (PDCCH) transmitted by N transmission-reception points, and the N is an integer greater than or equal to 2;
the receiving module is configured to receive the PDCCHs based on the first information.

In a possible implementation, the first information is used to indicate at least one of the following information:
an association relationship between different search spaces; or,
an association relationship between different PDCCH candidate sets; or,
an association relationship between different PDCCH candidates.

In a possible implementation, the N transmission-reception points correspond to a same frequency domain resource set, and different transmission-reception points correspond to different PDCCH candidate sets; and
the first information is used to indicate an association relationship between different PDCCH candidate sets.

In a possible implementation, the N transmission-reception points include a first transmission-reception point and a second transmission-reception point, the first transmission-reception point corresponds to a first PDCCH candidate set, and the second transmission-reception point corresponds to a second PDCCH candidate set;
the first information is used to indicate an association relationship between the first PDCCH candidate set and the second PDCCH candidate set.

In a possible implementation, the first information is used to indicate that there is an association relationship between an i-th PDCCH in the first PDCCH candidate set and an i-th PDCCH in the second PDCCH candidate set;
where the i is less than or equal to a number of PDCCHs included in the first PDCCH candidate set, and the i is less than or equal to a number of PDCCHs included in the second PDCCH candidate set.

In a possible implementation, the N transmission-reception points correspond to a same frequency domain resource set;
the first information is used to indicate an association relationship between different PDCCH candidates in a same aggregation level.

In a possible implementation, multiple search spaces correspond to a same frequency domain resource set;
the first information is used to indicate that there is an association relationship between PDCCHs in at least two search spaces.

In a possible implementation, the multiple search spaces include a first search space and a second search space, the first search space includes *M*₁ PDCCH candidate sets in a period, the second search space includes *M*₂ PDCCH candidate sets in a period;
the first information is used to indicate that there is an association relationship between an i-th PDCCH candidate set in the first search space and an i-th PDCCH candidate set in the second search space, i ≤ *M*₁, and i ≤ *M*₂.

In a possible implementation, in time domain, the *M*₁ PDCCH candidate sets are arranged sequentially, and the *M*₂ PDCCH candidate sets are arranged sequentially.

In a possible implementation, one search space is associated with at least two frequency domain resource sets;
the first information is used to indicate that there is an association relationship between PDCCHs corresponding to the at least two frequency domain resource sets.

In a possible implementation, different control resource sets (CORESET) are frequency division multiplexing (FDM); the at least two frequency domain resource sets include a first frequency domain resource set and a second frequency domain resource set, where the first frequency domain resource set corresponds to a first PDCCH candidate set, and the second frequency domain resource set corresponds to a second PDCCH candidate set; and
the first information is used to indicate that there is an association relationship between PDCCH candidates in the first PDCCH candidate set and PDCCH candidates in the second PDCCH candidate set.

In a possible implementation, the first information is used to indicate that there is an association relationship between an i-th PDCCH candidate in the first PDCCH candidate set and an i-th PDCCH candidate in the second PDCCH candidate set, the i is a positive integer less than or equal to P, and the P is a number of PDCCH candidates included in the search space.

In a possible implementation, the first PDCCH candidate set includes Q first PDCCH candidate sub-sets, and the second PDCCH candidate set includes Q second PDCCH candidate sub-sets; and
the first information is used to indicate that there is an association relationship between an i-th first PDCCH candidate sub-set in the first PDCCH candidate set and an i-th second PDCCH candidate sub-set in the second PDCCH candidate set.

In a possible implementation, the at least two frequency domain resource sets include a first frequency domain resource set and a second frequency domain resource set, the first frequency domain resource set corresponds to T first PDCCH candidate sets, the second frequency domain resource set corresponds to T second PDCCH candidate sets, and the T is an integer greater than or equal to 1; and
the first information is used to indicate that there is an association relationship between an i-th first PDCCH candidate set in the T first PDCCH candidate sets and an i-th second PDCCH candidate set in the T second PDCCH candidate sets, and the i is a positive integer less than or equal to the T.

In a possible implementation, the i-th first PDCCH candidate set includes S PDCCH candidates, and the i-th second PDCCH candidate set includes S PDCCH candidates, the S is an integer greater than or equal to 1; and
the first information is further used to indicate that there is an association relationship between a j-th PDCCH candidate in the i-th first PDCCH candidate set and a j-th PDCCH candidate in the i-th second PDCCH candidate set, and the j is an integer less than or equal to the S.

In a possible implementation, a first search space is associated with a first frequency domain resource set, and a second search space is associated with a second frequency domain resource set; and
the first information is used to indicate that there is an association relationship between PDCCH candidates in the first search space and PDCCH candidates in the second search space.

In a possible implementation, a period of the first search space includes *K*₁ PDCCH candidate sets, a period of the second search space includes *K*₂ PDCCH candidate sets, the *K*₁ is an integer greater than or equal to 1, and the *K*₂ is an integer greater than or equal to 1; and
the first information is used to indicate that there is an association relationship between an i-th PDCCH candidate set in the *K*₁ PDCCH candidate sets and an i-th PDCCH candidate set in the *K*₂ PDCCH candidate sets, i ≤ *K*₁, and i ≤ *K*₂.

In a possible implementation, in time domain, the *K*₁ PDCCH candidate sets are arranged sequentially, and the *K*₂ PDCCH candidate sets are arranged sequentially.

In a possible implementation, the first information is used to indicate that there is an association relationship between a first PDCCH candidate set in the first search space and a second PDCCH candidate set in the second search space; and
where, in time domain, the second PDCCH candidate set is a PDCCH candidate set closest to the first PDCCH candidate set and after the first PDCCH candidate set.

In a third aspect, an embodiment of the present disclosure provides a terminal device, including: a transceiver, a processor and a memory;
where the memory stores a computer-executable instruction;
the processor executes the computer-executable instruction stored in the memory, so that the processor executes the communication method according to any one of the first aspect.

In a fourth aspect, an embodiment of the present application provides a computer-readable storage medium, where the computer-readable storage medium stores a computer-executable instruction thereon, and the computer-executable instruction, when executed by a processor, implements the communication method according to any one of the first aspect.

In a fifth aspect, an embodiment of the present application provides a computer program product, including a computer program which, when executed by a processor, implements the communication method according to any one of the first aspect.

According to the communication method and apparatus, and the device provided in the embodiments of the present application, before receiving the PDCCH, the terminal device can first acquire an association relationship of the PDCCHs sent by multiple transmission-reception points, and perform reception of the PDCCHs and joint decoding on the PDCCHs based on the association relationship of the PDCCHs. Further, the probability of successful receipt of the PDCCH by the terminal device is increased.

### BRIEF DESCRIPTION OF DRAWINGS

FIG. 1A is an architecture diagram of a communication system provided by an embodiment of the present application.
FIG. 1B is an architecture diagram of another communication system provided by an embodiment of the present application.
FIG. 2 is a schematic flowchart of a communication method provided by an embodiment of the present application.
FIG. 3A is a schematic diagram of a search space provided by an embodiment of the present application.
FIG. 3B is a schematic diagram of another search space provided by an embodiment of the present application.
FIG. 3C is a schematic diagram of another search space provided by an embodiment of the present application.
FIG. 3D is a schematic diagram of another search space provided by an embodiment of the present application.
FIG. 4A is a schematic diagram of a search space in an FDM mode provided by an embodiment of the present application.
FIG. 4B is a schematic diagram of another search space in an FDM mode provided by an embodiment of the present application.
FIG. 4C is a schematic diagram of a search space in a TDM mode provided by an embodiment of the present application.
FIG. 4D is a schematic diagram of another search space in a TDM mode provided by an embodiment of the present application.
FIG. 5A is a schematic diagram of a search space provided by an embodiment of the present application.
FIG. 5B is a schematic diagram of another search space provided by an embodiment of the present application.
FIG. 5C is a schematic diagram of another search space provided by an embodiment of the present application.
FIG. 6 is a schematic structural diagram of a communication apparatus provided by an embodiment of the present application.
FIG. 7 is a schematic structural diagram of a terminal device provided by an embodiment of the present application.

### DESCRIPTION OF EMBODIMENTS

For ease of understanding, concepts involved in embodiments of the present application will be described first.

Network device: a device with a wireless transmission-reception function. The network device includes but is not limited to: an evolutional base station (Evolutional Node B, eNB or eNodeB) in long term evolution (long term evolution, LTE), a base station (gNodeB or gNB) or TRP in new radio (new radio, NR), a base station in a subsequent evolved system, an access node in a wireless fidelity (wireless fidelity, WiFi) system, a wireless relay node, a wireless backhaul node, etc. The base station may be: a macro base station, a micro base station, a pico base station, a small station, a relay station, or a balloon station, etc. Multiple base stations may support the aforementioned networks for the same technology, or may support the aforementioned networks for different technologies. A base station may contain one or more co-sited or non-co-sited TRPs.

Terminal device: a device with a wireless transmission-reception function. The terminal device can be deployed on land, including indoors or outdoors, handheld, wearable or vehicle-mounted, the terminal device can also be deployed on water (such as on a ship), and the terminal can also be deployed in the air (such as on an aircraft, a balloon or a satellite). The terminal device may be a mobile phone (mobile phone), a tablet computer (Pad), a computer with a wireless transmission-reception function, a virtual reality (virtual reality, VR) terminal device, an augmented reality (augmented reality, AR) terminal device, an wireless terminal in industrial control (industrial control), a vehicle-mounted terminal device, a wireless terminal in self driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), a wearable terminal device, etc. The terminal device involved in the embodiments of the present application may also be referred to as a terminal, a user equipment (user equipment, UE), a access terminal device, a vehicle-mounted terminal, an industrial control terminal, a LTE unit, a LTE station, a mobile station, a mobile termination, a remote station, a remote terminal device, a mobile device, a LTE terminal device, a wireless communication device, a LTE agent or a LTE apparatus, etc. The terminal device can be fixed or mobile.

Transmission-reception point (transmit/receive point, TRP): a network device may include one or more transmission-reception points. A transmission-reception point may be an independent network device, or a part of the network device with a transmission-reception function. For example, a transmission-reception point may be an antenna, a group of antenna arrays, or an antenna panel in the network device.

The frequency domain resource set may also be a control-resource set (control-resource set, CORESET).

Association relationship between different PDCCH candidates (PDCCH candidate): referring to that PDCCHs received on different PDCCH candidates have an association relationship. The PDCCHs received on different PDCCH candidates with an association relationship therebetween being the same, or the PDCCHs received carry same control information, or the PDCCHs received schedule a same PDSCH. Optionally, if multiple PDCCHs are received on the PDCCH candidates with an association relationship, joint decoding may be performed based on the multiple PDCCHs. Optionally, different PDCCH candidates must have a same aggregation level (aggregation level).

Association relationship between different PDCCH candidate sets: referring to that PDCCHs detected in different PDCCH candidate sets have an association relationship. For example, it is assumed that there is an association relationship between a first PDCCH candidate set and a second PDCCH candidate set, then, there is an association relationship between a PDCCH detected in the first PDCCH candidate set and a PDCCH detected in the second PDCCH candidate set. The PDCCHs received on different PDCCH candidate sets with an association relationship therebetween are the same, or the PDCCHs received carry same control information, or the PDCCHs received schedule a same PDSCH. Optionally, the PDCCH candidates in the different PDCCH candidate sets must have a same aggregation level.

Association relationship between different search spaces: referring to that PDCCHs detected in different search spaces have an association relationship. For example, it is assumed that there is an association relationship between a first search space and a second search space, then, there is an association relationship between a PDCCH detected in the first search space and a PDCCH detected in the second search space. The PDCCHs received in different search spaces with an association relationship therebetween are the same, or the PDCCHs received carry same control information, or the PDCCHs received schedule a same PDSCH. Optionally, the detected PDCCHs must have a same aggregation level.

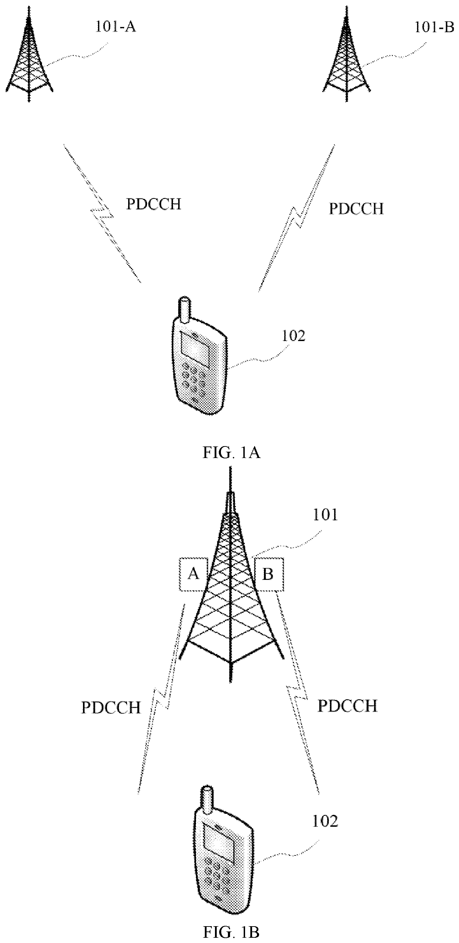

Next, with reference to FIG. 1A-FIG. 1B, a communication system to which the embodiment of the present application is applied will be described.

FIG. 1A is an architecture diagram of a communication system provided by an embodiment of the present application. Please refer to FIG. 1A, which shows a network device 101 and a terminal device 102. The network device 101 is provided with a transmission-reception point A and a transmission-reception point B. The transmission-reception point A and the transmission-reception point B can transmit a same PDCCH to the terminal device 102, and the terminal device 102 can jointly decode the same PDCCH to increase the probability of successful receipt (or decoding) of the PDCCH by the terminal device 102.

FIG. 1B is an architecture diagram of another communication system provided by an embodiment of the present application. Please refer to FIG. 1B, which shows a transmission-reception point 101-A, a transmission-reception point 101-B and a terminal device 102. The two transmission-reception points are independent network devices respectively. Each of the multiple transmission-reception points can transmit an independent PDCCH to the terminal device 102. There is an association relationship between the independent PDCCHs, and the association relationship refers to that these PDCCHs may be the same PDCCH, or PDCCHs carrying same control information, or PDCCHs scheduling a same PDSCH. The terminal device 102 may jointly decode the PDCCHs with an association relationship, so as to increase the probability of successful receipt (or decoding) of the PDCCH by the terminal device 102.

In related technologies, after multiple transmission-reception points transmit the same PDCCH to the terminal device, since the terminal device cannot determine which PDCCHs have an associated relationship, the terminal device cannot jointly decode the PDCCHs with an associated relationship, resulting in a low probability of successful receipt of the PDCCH by the terminal device.

In order to solve the above technical problems, before receiving the PDCCH, the terminal device can first acquire the association relationship of the PDCCHs sent by multiple transmission-reception points, and perform reception of the PDCCHs and joint decoding on the PDCCHs based on the association relationship of the PDCCHs. Therefore, the probability of successful receipt of the PDCCH by the terminal device is increased.

The technical solution of the present application is illustrated by specific embodiments below. It should be noted that, the following embodiments may exist independently or be combined with each other, and the same or similar content will not be repeated in different embodiments.

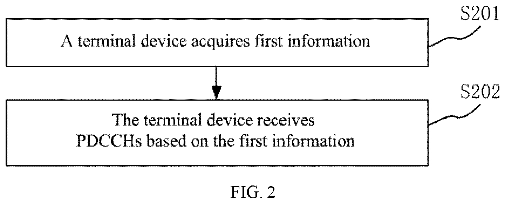

FIG. 2 is a schematic flowchart of a communication method provided by an embodiment of the present application. Please refer to FIG. 2, the method may include:
S201, a terminal device acquires first information.

The first information is used to indicate an association relationship of PDCCHs transmitted by N transmission-reception points, and the N is an integer greater than or equal to 2.

The association relationship refers to an association relationship between PDCCHs sent by different transmission-reception points, that is, the association relationship is used to indicate which PDCCHs sent by different transmission-reception points are the same. For example, if there is an association relationship between a PDCCH1 corresponding to a TPR1 and a PDCCH2 corresponding to a TRP2, the PDCCH1 sent by the TRP1 is the same as the PDCCH2 sent by the TRP2, and the terminal device can jointly receive and jointly decode the PDCCH1 and the PDCCH2. The joint reception may indicate that the terminal device performs blind detection on the PDCCH1 and the PDCCH2 at the same time, and the joint decoding may refer to that the terminal device performs soft-combination on the PDCCH1 and the PDCCH2 for decoding.

The terminal device may acquire the first information in the following two ways.

Mode 1, the terminal device may receive the first information from the network device.

For example, the network device may send the first information to the terminal device through higher layer signaling. For example, the higher layer signaling may be reestablishment radio resource control (radio resource control, RRC) signaling, media access control-control element (media access control-control element, MAC CE), downlink control information (downlink control information, DCI).

Mode 2, the first information may also be pre-configured or stipulated by a protocol.

It should be noted that, when application scenarios are different, the first information is also different, which will be described in the following embodiments and will not be repeated here.

S202, the terminal device receives the PDCCHs based on the first information.

The terminal device determines the PDCCHs with the association relationship based on the first information, and receives the PDCCHs with the association relationship. The PDCCHs with the association relationship are PDCCHs sent by different transmission-reception points. After receiving the PDCCHs with the association relationship, the terminal device may perform joint decoding on the PDCCHs with the association relationship.

In the embodiment of the present application, before receiving the PDCCH, the terminal device can first acquire an association relationship of the PDCCHs sent by multiple transmission-reception points, and perform reception of the PDCCHs and joint decoding on the PDCCHs based on the association relationship of the PDCCHs. Therefore, the probability of successful receipt of the PDCCH by the terminal is increased.

Next, the first information in different cases will be described respectively.

First case: the N transmission-reception points correspond to a same frequency domain resource set.

In this case, a CORESET is associated with at least two transmission configuration indicator (transmission configuration indicator, TCI) states, each transmission-reception point corresponds to a TCI state, and it can be determined that a corresponding transmission-reception point is acquired based on the TCI state.

In this case, the PDCCH candidates may be divided into N PDCCH candidate sets based on the number N of transmission-reception points, and different transmission-reception points correspond to different PDCCH candidate sets. The first information may indicate the following two cases.

Case 1, the first information is used to indicate an association relationship between different PDCCH candidate sets.

Optionally, the terminal device may acquire N PDCCH candidate sets in advance.

For example, it is assumed that the N is 3, the PDCCH candidates (PDCCH candidate) are divided into three PDCCH candidate sets, which are respectively recorded as PDCCH candidate set 1, PDCCH candidate set 2, and PDCCH candidate set 3. The first information may indicate that there is an association relationship between the PDCCH candidate set 1, the PDCCH candidate set 2 and the PDCCH candidate set 3. That is, there is an association relationship between a PDCCH detected in the PDCCH candidate set 1, a PDCCH detected in the PDCCH candidate set 2, and a PDCCH detected in the PDCCH candidate set 3. Optionally, the PDCCH candidates may be of a same aggregation level. Case 2, the first information indicates an association relationship between different PDCCH candidates. Optionally, the PDCCH candidates may be of a same aggregation level.

In case 2, the first information may indicate the association relationship between different PDCCH candidates. Different PDCCH candidates may correspond to different transmission-reception points. For example, first indication information indicates an association relationship between N different PDCCH candidates, and the N different PDCCHs are respectively associated with the N.

For example, it is assumed that the N is 3, the three transmission-reception points are recorded as transmission-reception point 1, transmission-reception point 2, and transmission-reception point 3 respectively. It is assumed that there are 6 PDCCH candidates, and the indexes of the 6 PDCCH candidates are 1, 2, 3, 4, 5, 6 respectively. The transmission-reception point 1 corresponds to the PDCCH 1 and the PDCCH 4, the transmission-reception point 2 corresponds to the PDCCH 2 and the PDCCH 5, and the transmission-reception point 3 corresponds to the PDCCH 3 and the PDCCH 6. The association relationship indicated by the first indication information can be as shown in Table 1:

**Table 1**

| Index of PDCCH candidates | Association relationship |
|---|---|
| 1,2,3,4,5,6 | (1,2,3), (4,5,6) |

Please refer to Table 1, the first information indicates that there is an association relationship between the PDCCH 1, the PDCCH 2 and the PDCCH 3, and there is an association relationship between the PDCCH 4, the PDCCH 5 and the PDCCH 6.

Next, the first information will be described by taking N as 2 as an example.

When the N is 2, the two transmission-reception points may include a first transmission-reception point and a second transmission-reception point, where the first transmission-reception point corresponds to a first PDCCH candidate set, and the second transmission-reception point corresponds to a second PDCCH candidate set. The first information may indicate the following two cases.

Case 1, the first information is used to indicate an association relationship between the first PDCCH candidate set and the second PDCCH candidate set.

Optionally, it is assumed that a number of PDCCH candidates is K, and indexes of the PDCCH candidates are sequentially recorded as 1, 2..., K (where the K is an even number greater than or equal to 2), then, an index of a PDCCH candidate in the first PDCCH candidate set is less than or equal to K/2, an index of a PDCCH candidate in the second PDCCH candidate set is greater than K/2; or, the index of the PDCCH candidate in the second PDCCH candidate set is less than or equal to K/2, the index of the PDCCH candidate in the first PDCCH candidate is greater than K/2. The PDCCH candidates may have a same aggregation level.

For example, it is assumed that the number of PDCCH candidates is 6, and indexes of PDCCH candidates are 1, 2, 3, 4, 5, 6 sequentially, the PDCCH candidates included in the first PDCCH candidate set and the second PDCCH candidate set can be as shown in Table 2 or as shown in Table 3:

**Table 2**

| First PDCCH candidate set | Second PDCCH candidate set |
|---|---|
| 1,2,3 | 4,5,6 |

Please refer to Table 2, the index of the PDCCH candidate included in the first PDCCH candidate set is less than or equal to 3, and the index of the PDCCH candidate included in the second PDCCH candidate set is greater than 3.

**Table 3**

| First PDCCH candidate set | Second PDCCH candidate set |
|---|---|
| 4,5,6 | 1,2,3 |

Please refer to Table 3, the index of the PDCCH candidate included in the first PDCCH candidate set is greater than 3, and the index of the PDCCH candidate included in the second PDCCH candidate set is less than or equal to 3.

Optionally, it is assumed that a number of the PDCCH candidates is K, and indexes of the PDCCH candidates are sequentially recorded as 1, 2..., K (where the K is an even number greater than or equal to 2), the index of the PDCCH candidate included in the first PDCCH candidate set may be odd, and the index of the PDCCH candidate included in the second PDCCH candidate set may be even; or, the index of the PDCCH candidate included in the first PDCCH candidate set may be even, and the index of the PDCCH candidate included in the second PDCCH candidate set may be odd. The PDCCH candidates may have a same aggregation level.

For example, it is assumed that the number of PDCCH candidates is 6, and indexes of PDCCH candidates are 1, 4, 5, 4, 5, 6 sequentially, the PDCCH candidates included in the first PDCCH candidate set and the second PDCCH candidate set can be as shown in Table 4 or as shown in Table 5:

**Table 4**

| First PDCCH candidate set | Second PDCCH candidate set |
|---|---|
| 1,3,5 | 2,4,6 |

Please refer to Table 2, the index of the PDCCH candidate included in the first PDCCH candidate set is odd, and the index of the PDCCH candidate included in the second PDCCH candidate set is even.

**Table 5**

| First PDCCH candidate set | Second PDCCH candidate set |
|---|---|
| 2,4,6 | 1,3,5 |

Please refer to Table 3, the index of the PDCCH candidate included in the first PDCCH candidate set is even, and the index of the PDCCH candidate included in the second PDCCH candidate set is odd.

Case 2: the first information is used to indicate that there is an association relationship between an i-th PDCCH candidate and a j-th PDCCH candidate in the PDCCH candidate set, where i and j may be indexes of PDCCH candidates. Optionally, the PDCCH candidates must be of a same aggregation level. The i and j are respectively less than or equal to the number of PDCCH candidates included in the PDCCH candidate set, and the PDCCH candidate set includes PDCCH candidates in a preset aggregation level.

For example, the association relationship indicated by the first information may be as shown in Table 6:

**Table 6**

| Index of PDCCH candidates | Association relationship |
|---|---|
| 1,2,3,4,5,6 | (1,4), (2,5), (3,6) |
| 1,2 | (1,2) |
| 1,2,3,4 | (1,3), (2,4) |

Please refer to Table 6, when the indexes of the PDCCH candidate are 1, 2, 3, 4, 5, 6, the first information indicates that PDCCH 1 is associated with PDCCH 4, PDCCH 2 is associated with PDCCH 5, and PDCCH 3 is associated with PDCCH 6. When the indexes of the PDCCH candidates are 1, 2, PDCCH 1 is associated with PDCCH 2. When the indexes of the PDCCH candidates are 1, 2, 3, 4, PDCCH 1 is associated with PDCCH 3, and PDCCH 2 is associated with PDCCH 4.

For example, it is assumed that the first PDCCH candidate set and the second PDCCH candidate set are as shown in Table 5, the association relationship indicated by the first information then may be as shown in Table 7:

**Table 7**

| Index of PDCCH candidates | Association relationship |
|---|---|
| 1,2,3,4,5,6 | (1,2), (3,4), (5,6) |
| 1,2 | (1,2) |
| 1,2,3,4 | (1,2), (3,4) |

Please refer to Table 7, when indexes of the PDCCH candidate are 1, 2, 3, 4, 5, 6, the first information indicates that PDCCH 1 is associated with PDCCH 2, PDCCH 3 is associated with PDCCH 4, and PDCCH 5 is associated with PDCCH 6. When the indexes of the PDCCH candidates are 1, 2, PDCCH 1 is associated with PDCCH 2. When the indexes of the PDCCH candidates are 1, 2, 3, 4, PDCCH 1 is associated with PDCCH 2, and PDCCH 3 is associated with PDCCH 4.

Second case: multiple search spaces correspond to a same frequency domain resource set.

In this case, the first information is used to indicate that there is an association relationship between PDCCHs in two or more search spaces.

In the following, description will be made by taking the first information indicating that there is an association relationship between the PDCCHs in the two search spaces as an example.

A period in the first search space includes *M*₁ slots, where in each slot, the time frequency resource region, that can be determined based on the search space and CORESET configuration information, correspond to respective PDCCH candidate set. A period in the second search space includes *M*₂ slots, where, in each slot, the time frequency resource region, that can be determined based on the search space and CORESET configuration information, correspond to respective PDCCH candidate set. For a period, the first information is used to indicate that an i-th PDCCH candidate set in the first search space is associated with an i-th PDCCH candidate set in the second search space, i ≤ *M*₁, and i ≤ *M*₂. In the time domain, the PDCCH candidate sets corresponding to *M*₁ slots are arranged sequentially, and the PDCCH candidate sets corresponding to *M*₂ slots are arranged sequentially. Optionally, a PDCCH candidate set may include a PDCCH in a slot (slot).

An i-th time frequency resource region corresponds to a time frequency resource region on an i-th slot determined jointly based on the search space and the CORESET within a search space period, and the time frequency resource region can be used to carry the transmission of the PDCCH. The i is less than or equal to the number of slots included in the search space in a period.

It should be noted that, the PDCCH candidate set X mentioned in the embodiment of the present application can also be understood as an X-th time frequency resource region.

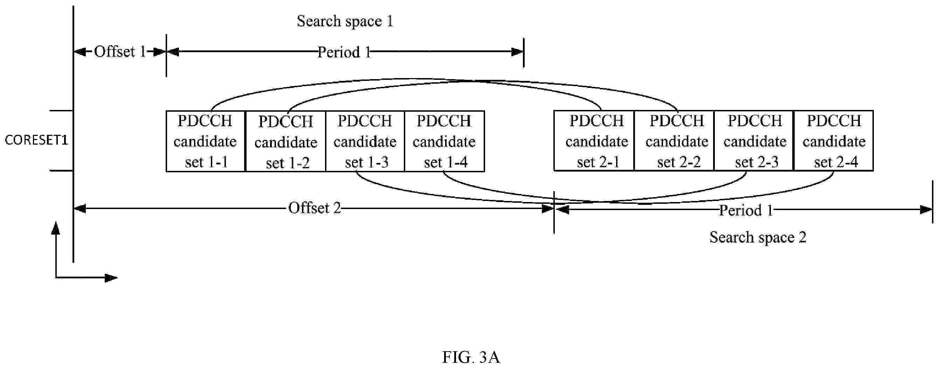

In this case, the association relationship between adjacent periods of two search spaces may be different, which will be described below with reference to FIG. 3A-FIG. 3D.

As an example, periods of search space 1 and search space 2 can be the same. Optionally, slot durations of the search space 1 and the search space 2 are the same. The slot duration indicates a number of slots occupied by the search space in a period.

FIG. 3A is a schematic diagram of a search space provided by an embodiment of the present application. Please refer to FIG. 3A, the horizontal axis represents the time domain, and the vertical axis represents the frequency domain. The frequency domain resources corresponding to search space 1 and search space 2 are the same, both of which correspond to CORESER 1. The periods of the search space 1 and the search space 2 are the same, both of which are period 1. The search space 1 and the search space 2 have the same slot duration (both are 4 slots (slot)), and the search space 1 includes 4 PDCCH candidate sets in a period, which are respectively recorded as PDCCH candidate set 1-1, PDCCH candidate set 1-2, PDCCH candidate set 1-3 and PDCCH candidate set 1-4. The search space 2 includes 4 PDCCH candidate sets in a period, which are respectively recorded as PDCCH candidate set 2-1, PDCCH candidate set 2-2, PDCCH candidate set 2-3 and PDCCH candidate set 2-4. An offset of the search space 1 may be different from an offset of the search space 2, the offset of the search space 1 is offset 1, and the offset of the search space 2 is offset 2. In this scenario, the first information indicates that an i-th (where the i is less than or equal to 4) PDCCH candidate set in the search space 1 is associated with an i-th PDCCH candidate set in the search space 2. That is, the first information indicates that the PDCCH candidate set 1-1 is associated with the PDCCH candidate set 2-1, the PDCCH candidate set 1-2 is associated with the PDCCH candidate set 2-2, the PDCCH candidate set 1-3 is associated with the PDCCH candidate set 2-3, and the PDCCH candidate set 1-4 is associated with the PDCCH candidate set 2-4.

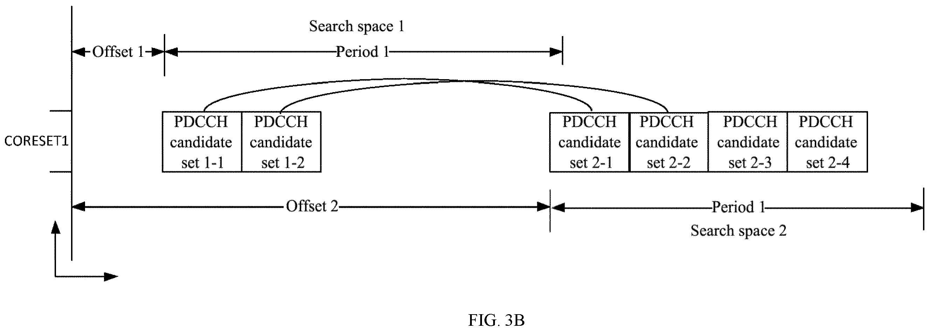

FIG. 3B is a schematic diagram of another search space provided by an embodiment of the present application. Please refer to FIG. 3B, the horizontal axis represents the time domain, and the vertical axis represents the frequency domain. The frequency domain resources corresponding to search space 1 and search space 2 are the same, both of which correspond to CORESER 1. The periods of the search space 1 and the search space 2 are the same, both of which are period 1. The slot duration of the search space 1 is different from the slot duration of the search space 2, the duration of the search space 1 is 2 slots (slot), and the duration of the search space 2 is 4 slots. The search space 1 includes 2 PDCCH candidate sets in a period, which are respectively recorded as PDCCH candidate set 1-1 and PDCCH candidate set 1-2. The search space 2 includes 4 PDCCH candidate sets in a period, which are respectively recorded as PDCCH candidate set 2-1, PDCCH candidate set 2-2, PDCCH candidate set 2-3 and PDCCH candidate set 2-4. An offset of the search space 1 is different from an offset of the search space 2, the offset of the search space 1 is offset 1, and the offset of the search space 2 is offset 2. In this scenario, the first information indicates that an i-th (where the i is less than or equal to 2) PDCCH candidate set in the search space 1 is associated with an i-th PDCCH candidate set in the search space 2. That is, the first information indicates that the PDCCH candidate set 1-1 is associated with the PDCCH candidate set 2-1, the PDCCH candidate set 1-2 is associated with the PDCCH candidate set 2-2. That is, it is assumed that the slot duration of the search space 1 is M1 slots, and the slot duration of the search space 2 is M2 slots, the association relationship then will only exist between an i-th PDCCH candidate set (where the i is less than or equal to min (M1, M2)) in the search space and an i-th PDCCH candidate set in the search space 2. Where min(x, y) represents the minimum of x and y.

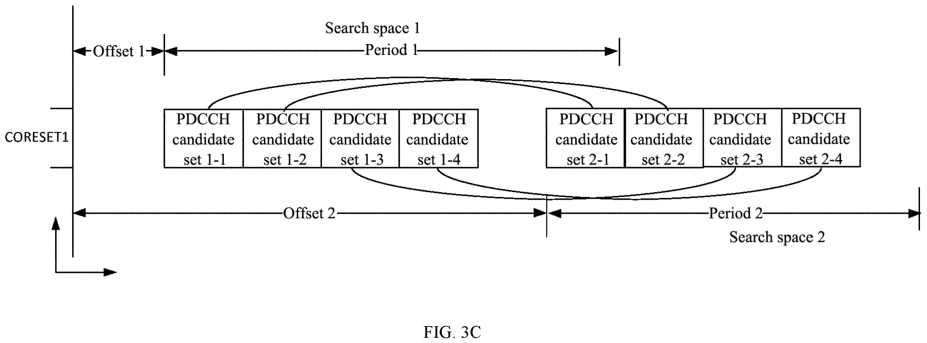

FIG. 3C is a schematic diagram of another search space provided by an embodiment of the present application. Please refer to FIG. 3C, the horizontal axis represents the time domain, and the vertical axis represents the frequency domain. The frequency domain resources corresponding to search space 1 and search space 2 are the same, both of which correspond to CORESER 1. A period of the search space 1 is different from a period of the search space 2, the period of the search space 1 is period 1, and the period of the search space 2 is period 2. Slot durations of the search space 1 and the search space 2 are the same (both are 4 slots (slot)). The search space 1 includes 4 PDCCH candidate sets in a period, which are respectively recorded as PDCCH candidate set 1-1, PDCCH candidate set 1-2, PDCCH candidate set 1-3 and PDCCH candidate set 1-4. The search space 2 includes 4 PDCCH candidate sets in a period, which are respectively recorded as PDCCH candidate set 2-1, PDCCH candidate set 2-2, PDCCH candidate set 2-3 and PDCCH candidate set 2-4. A period of the search space 1 and a period of the search space 2 have a specific relationship in the time domain. The specific relationship may be that the two periods are adjacent in time. For example, a period of the search space 2 may be a period of the search space 2 closest to a period of the search space 1 and after the period of the search space 1, or a period of the search space 2 may be a period of the search space 2 closest to a period of the search space 1 and before the period of the search space 1. An offset of the search space 1 may be different from an offset of the search space 2, it is assumed that the offset of the search space 1 is offset 1, and the offset of the search space 2 is offset 2. In this scenario, the first information indicates that an i-th (where the i is less than or equal to 4) PDCCH candidate set in the search space 1 is associated with an i-th PDCCH candidate set in the search space 2. That is, the first information indicates that the PDCCH candidate set 1-1 is associated with the PDCCH candidate set 2-1, the PDCCH candidate set 1-2 is associated with the PDCCH candidate set 2-2, the PDCCH candidate set 1-3 is associated with the PDCCH candidate set 2-3, and the PDCCH candidate set 1-4 is associated with the PDCCH candidate set 2-4.

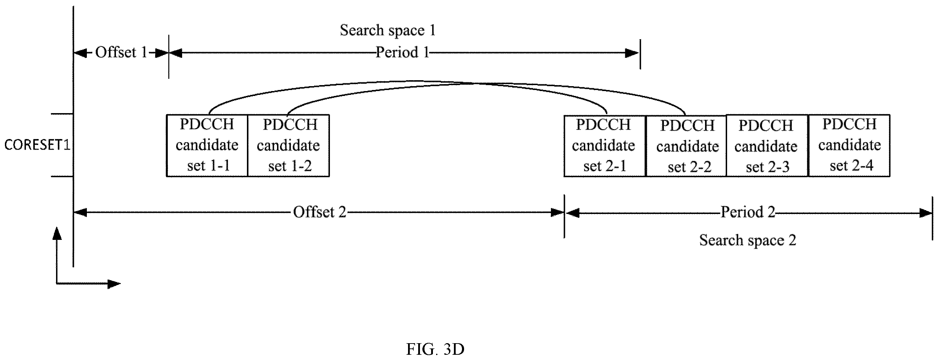

FIG. 3D is a schematic diagram of another search space provided by an embodiment of the present application. Please refer to FIG. 3D, the horizontal axis represents the time domain, and the vertical axis represents the frequency domain. The frequency domain resources corresponding to search space 1 and search space 2 are the same, both of which correspond to CORESER 1. A period of the search space 1 is different from a period of the search space 2, the period of the search space 1 is period 1, and the period of the search space 2 is period 2. The slot duration of the search space 1 is different from the slot duration of the search space 2, the duration of the search space 1 is 2 slots (slot), and the duration of the search space 2 is 4 slots. The search space 1 includes 2 PDCCH candidate sets in a period, which are recorded as PDCCH candidate set 1-1 and PDCCH candidate set 1-respectively 2. The search space 2 includes 4 PDCCH candidate sets in a period, which are recorded as PDCCH candidate set 2-1, PDCCH candidate set 2-2, PDCCH candidate set 2-3 and PDCCH candidate set 2-4 respectively. A period of the search space 1 and a period of the search space 2 have a specific relationship in the time domain. The specific relationship may be that the two periods are adjacent in time. For example, a period of the search space 2 may be a period of the search space 2 closest to a period of the search space 1 and after the period of the search space 1, or a period of the search space 2 may be a period of the search space 2 closest to a period of the search space 1 and before the period of the search space 1. An offset of the search space 1 may be different from an offset of the search space 2, the offset of the search space 1 is offset 1, and the offset of the search space 2 is offset 2. In this scenario, the first information indicates that an i-th (where the i is less than or equal to 2) PDCCH candidate set in the search space 1 is associated with an i-th PDCCH candidate set in the search space 2. That is, the first information indicates that the PDCCH candidate set 1-1 is associated with the PDCCH candidate set 2-1, and the PDCCH candidate set 1-2 is associated with the PDCCH candidate set 2-2.

In the scenarios shown in FIG. 3A-FIG. 3D, the first information may further indicate an association relationship between PDCCH candidates in two PDCCH candidate sets with an association relationship. Optionally, it is assumed that there is an association relationship between a first PDCCH candidate set and a second PDCCH candidate set, the first information may also indicate an association relationship between PDCCH candidates in the first PDCCH candidate set and PDCCH candidates in the second PDCCH candidate set.

Example 1, in any scenario shown in FIG. 3A-FIG. 3D, it is assumed that PDCCH candidate set 1-1 and PDCCH candidate set 2-1 respectively include 6 PDCCH candidates, the association relationship between the PDCCH candidate set 1-1 and the PDCCH candidate set 1-2 indicated by the first information may be as shown in Table 8:

**Table 8**

| PDCCH candidate set 1-1 | PDCCH candidate set 2-1 |
|---|---|
| PDCCH candidate 1-1 | PDCCH candidate 2-1 |
| PDCCH candidate 1-2 | PDCCH candidate 2-2 |
| PDCCH candidate 1-3 | PDCCH candidate 2-3 |
| PDCCH candidate 1-4 | PDCCH candidate 2-4 |
| PDCCH candidate 1-5 | PDCCH candidate 2-5 |
| PDCCH candidate 1-6 | PDCCH candidate 2-6 |

Please refer to Table 8, the first information is used to indicate that the i-th PDCCH candidate in the PDCCH candidate set 1-1 is associated with the i-th PDCCH candidate in the PDCCH candidate set 2-1. The i takes 1, 2, 3, 4, 5, 6 in turn. The PDCCH candidate set 1-1 may be transmitted by TRP-1 correspondingly, and the PDCCH candidate set 2-1 may be transmitted by TRP-2 correspondingly.

Example 2, in any scenario shown in FIG. 3A-FIG. 3D, it is assumed that the PDCCH candidate set 1-1 and the PDCCH candidate set 1-2 respectively include 6 PDCCH candidates. The PDCCH candidate set 1-1 includes PDCCH candidate sub-set 1-1 (PDCCH candidate 1-1, PDCCH candidate 1-2, PDCCH candidate 1-3) and PDCCH candidate sub-set 1-2 (PDCCH candidate 1-4, PDCCH candidate 1-5, PDCCH candidate 1-6), the PDCCH candidate set 2-1 includes PDCCH candidate sub-set 2-1 (PDCCH candidate 2-1, PDCCH candidate 2-2, PDCCH candidate 2-3) and PDCCH candidate sub-set 2-2, the association relationship indicated by the first information then can be as shown in Table 9:

**Table 9**

| PDCCH candidate set 1-1 | PDCCH candidate set 2-1 |
|---|---|
| PDCCH candidate sub-set 1-1 (PDCCH candidate 1-1, PDCCH candidate 1-2, PDCCH candidate 1-3) | PDCCH candidate sub-set 2-1 (PDCCH candidate 2-1, PDCCH candidate 2-2, PDCCH candidate 2-3) |
| PDCCH candidate sub-set 1-2 (PDCCH candidate 1-4, PDCCH candidate 1-5, PDCCH candidate 1-6) | PDCCH candidate sub-set 2-2 (PDCCH candidate 2-4, PDCCH candidate 2-5, PDCCH candidate 2-6) |

Please refer to Table 9, the PDCCH candidate sub-set 1-1 is associated with the PDCCH candidate sub-set 2-1. The PDCCH candidate sub-set 1-2 is associated with the PDCCH candidate sub-set 2-2.

Third case: a search space is associated with at least two frequency domain resource sets.

In this case, the first information is used to indicate that there is an association relationship between PDCCHs corresponding to the at least two frequency domain resource sets.

Optionally, it is assumed that the at least two frequency domain resources include a first frequency domain resource set and a second frequency domain resource set. The first frequency domain resource set corresponds to a first PDCCH candidate set, and the second frequency domain resource set corresponds to a second PDCCH candidate set, the first information is used to indicate that there is an association relationship between the first PDCCH candidate set and the second PDCCH candidate set.

The multiplexing mode between different CORESETs can be frequency division multiplexing (frequency division multiplexing, FDM) and time division multiplexing (time division multiplexing, TDM). The association relationship indicated by the first information in different multiplexing modes will be described below, including the following two cases.

Case 1, FDM is used between different CORESETs.

When FDM is used between different CORESETs, at least two frequency domain resource sets include a first frequency domain resource set and a second frequency domain resource set. The first frequency domain resource set corresponds to a first PDCCH candidate set, and the second frequency domain resource set corresponds to a second PDCCH candidate set. The first information is used to indicate that there is an association relationship between a PDCCH in the first PDCCH candidate set and a PDCCH in the second PDCCH candidate set.

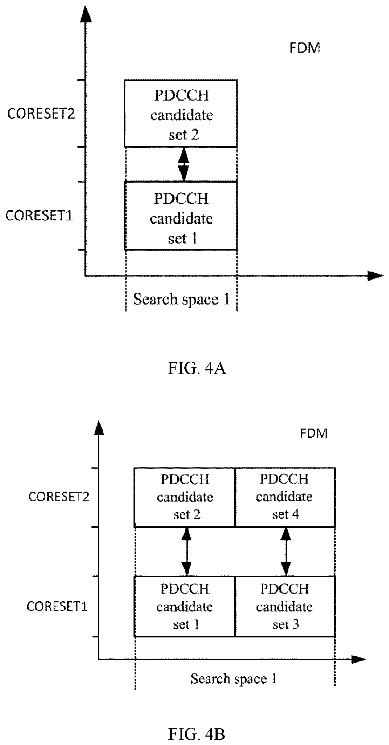

The search space in the FDM mode will be described below with reference to FIG. 4A-FIG. 4B.

FIG. 4A is a schematic diagram of a search space in an FDM mode provided by an embodiment of the present application. Please refer to FIG. 4A, the horizontal axis represents the time domain, and the vertical axis represents the frequency domain. Search space 1 is associated with two frequency domain resource sets. The slot duration of the search space 1 is 1 slot (slot). The search space 1 includes PDCCH candidate set 1 and PDCCH candidate set 2 in a period. The PDCCH candidate set 1 corresponds to frequency domain resource 1 (CORESET1), and the PDCCH candidate set 2 corresponds to frequency domain resource 2 (CORESET2), the first information then may indicate that the PDCCH candidate set 1 corresponds to the PDCCH candidate set 2. On a frequency domain resource set, a slot corresponds to a PDCCH candidate set.

FIG. 4B is a schematic diagram of another search space in an FDM mode provided by an embodiment of the present application. Please refer to FIG. 4B, the horizontal axis represents the time domain, and the vertical axis represents the frequency domain. Search space 1 is associated with two frequency domain resource sets. The slot duration of the search space 1 is 1 slot (slot). In a period, the search space 1 includes PDCCH candidate set 1, PDCCH candidate set 2, PDCCH candidate set 3, and PDCCH candidate set 4 in a period. The PDCCH candidate set 1 and the PDCCH candidate set 3 correspond to the frequency domain resource 1 (CORESET1), the PDCCH candidate set 2 and PDCCH candidate set 4 correspond to the frequency domain resource 2 (CORESET2), the first information then may indicate that the PDCCH candidate set 1 corresponds to the PDCCH candidate set 2, and the PDCCH candidate set 2 corresponds to the PDCCH candidate set 3. On a frequency domain resource set, a slot corresponds to a PDCCH candidate set.

Optionally, the first information may also indicate an association relationship between a PDCCH in the first PDCCH candidate set and a PDCCH candidate in the second PDCCH candidate set. Reference may be made to the examples shown in Table 8-Table 9, which will not be repeated here.

Case 2, TDM is used between different CORESETs.

When TDM is used between different CORESETs, at least two frequency domain resource sets include a first frequency domain resource set and a second frequency domain resource set. The first frequency domain resource set corresponds to T first PDCCH candidate sets, and the second frequency domain resource set corresponds to T second PDCCH candidate sets, the first information is then used to indicate that there is an association relationship between an i-th first PDCCH candidate set in the T first PDCCH candidate sets and an i-th second PDCCH candidate set in the T second PDCCH candidate sets. The T is an integer greater than or equal to 1, and the i is a positive integer less than or equal to the T. Each PDCCH candidate set corresponds to a slot, the T first PDCCH candidate sets are arranged sequentially in the time domain, and the T second PDCCH candidate sets are arranged sequentially in the time domain.

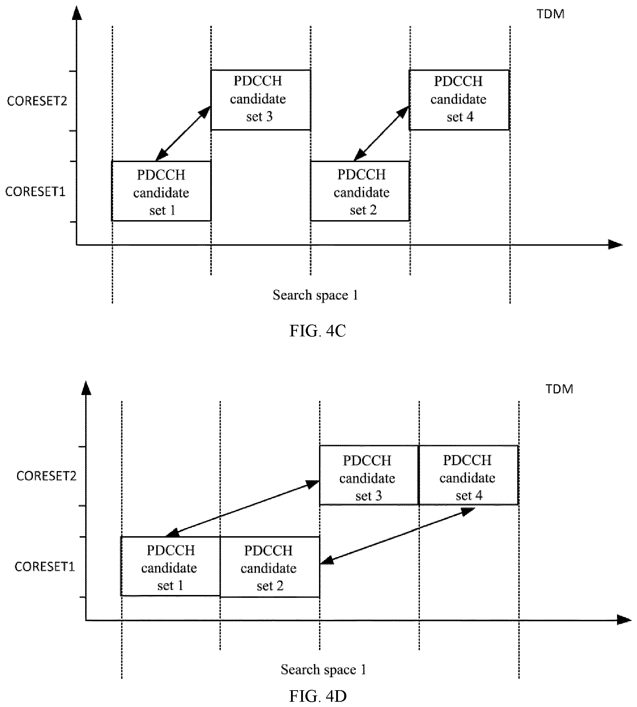

The search space in the TDM mode will be described below with reference to FIG.4C-FIG. 4D.

FIG. 4C is a schematic diagram of a search space in a TDM mode provided by an embodiment of the present application. FIG. 4D is a schematic diagram of another search space in a TDM mode provided by an embodiment of the present application. Please refer to FIG. 4C-FIG. 4D, the horizontal axis represents the time domain, and the vertical axis represents the frequency domain. Search space 1 is associated with two frequency domain resource sets (frequency domain resource set 1 (CORESET1) and frequency domain resource set 2 (CORESET2)). The slot duration of the search space 1 is 4 slots. The search space 1 includes PDCCH candidate set 1, PDCCH candidate set 2, PDCCH candidate set 3, and PDCCH candidate set 4 in a period. The frequency domain resource set 1 (CORESET1) corresponds to the PDCCH candidate set 1 and the PDCCH candidate set 2, and the frequency domain resources set 2 (CORESET2) corresponds to the PDCCH candidate set 3 and the PDCCH candidate set 4, the first information then indicates that the PDCCH candidate set 1 is associated with the PDCCH candidate set 3, and the PDCCH candidate set 2 is associated with the PDCCH candidate set 4. Optionally, it is assumed that the slot duration of the search space 1 is N slots, where an i-th slot (where the i is less than or equal to N/2) can be associated with the CORESET1, and a j-th slot (where the j is greater than N/2 and the j is less than or equal to N) can be associated with the CORESET2; or, the slot with an even index can be associated with the CORESET1, the slot with an odd index can be associated with the CORESET2; or the slot with an odd index can be associated with the CORESET1, the slot with an even index can be associated with the CORESET2.

Optionally, the i-th first PDCCH candidate set includes S PDCCH candidates, the i-th second PDCCH candidate set includes S PDCCH candidates, where the S is an integer greater than or equal to 1. In addition to indicating that the i-th first PDCCH candidate set is associated with the i-th second PDCCH candidate set, the first information is also used to indicate that there is an association relationship between the PDCCH candidate in the i-th first PDCCH candidate set and the PDCCH candidate in the i-th second PDCCH candidate set.

For example, the first information is further used to indicate that there is an association relationship between a j-th PDCCH candidate in the i-th first PDCCH candidate set and a j-th PDCCH candidate in the i-th second PDCCH candidate set, and the j is an integer less than or equal to the S. For specific examples, reference may be made to the example shown in Table 8, which will not be repeated here.

For example, the first information is also used to indicate that there is an association relationship between a PDCCH candidate sub-set in the i-th first PDCCH candidate set and a PDCCH candidate sub-set in the i-th second PDCCH candidate set. For specific examples, reference may be made to the example shown in Table 9, which will not be repeated here.

Fourth case: different search spaces are associated with different frequency domain resource sets.

In this case, the first information is used to indicate that there is an association relationship between PDCCHs in different search spaces.

Optionally, a first search space is associated with a first frequency domain resource set, and a second search space is associated with a second frequency domain resource set. In this case, the first information is used to indicate that there is an association relationship between a PDCCH in the first search space and a PDCCH in the second search space.

A period in the first search space includes *K*₁ slots, where, in each slot, the time frequency resource region, that can be determined based on the search space and CORESET configuration information, corresponds to respective PDCCH candidate set, that is, the first search space includes *K*₁ PDCCH candidate sets in a period, where the *K*₁ is an integer greater than or equal to 1. A period in the second search space includes *K*₂ slots, where in each slot, the time-frequency resource region, that can be determined based on the search space and CORESET configuration information, corresponds to respective PDCCH candidate set, that is, the second search space includes *K*₂ PDCCH candidate sets in a period, where the *K*₂ is an integer greater than or equal to 1. For a PDCCH candidate period of a PDCCH candidate, the first information is used to indicate that there is an association relationship between an i-th PDCCH candidate set in the *K*₁ PDCCH candidate sets and an i-th PDCCH candidate set in the *K*₂ PDCCH candidate sets, i ≤ *K*₁, and i ≤ *K*₂. In the time domain, the PDCCH candidate sets corresponding to *K*₁ slots are arranged sequentially, and the PDCCH candidate sets corresponding to *K*₂ slots are arranged sequentially.

A configuration parameter of the first search space may be different from a configuration parameter of the second search space. In a case that the first search space and the second search space have different configuration parameters, the association relationship indicated by the first information will be described respectively below. The configuration parameter may include a period, a slot duration, an offset, etc..

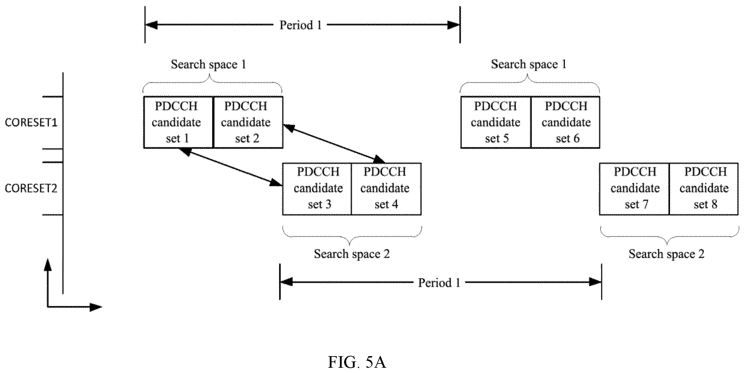

FIG. 5A is a schematic diagram of a search space provided by an embodiment of the present application. Please refer to FIG. 5A, the horizontal axis represents the time domain, and the vertical axis represents the frequency domain. Frequency domain resource set 1 (CORESET1) corresponds to search space 1, and frequency domain resource set 2 (CORESET2) corresponding to search space 2. The periods of the search space 1 and the search space 2 are the same, both of which are period 1. The search space 1 and the search space 2 have the same slot duration, both of which are 2 slots (slot). In a period, the search space 1 includes PDCCH candidate set 1 and PDCCH candidate set 2, and the search space 2 includes PDCCH candidate set 3 and PDCCH candidate set 4. In this case, the first information indicates that a first PDCCH candidate set in the search space 1 (the PDCCH candidate set 1) is associated with a first PDCCH candidate set in the search space 2 (the PDCCH candidate set 3), and a second PDCCH candidate set in the search space 1 (the PDCCH candidate set 2) is associated with a second PDCCH candidate set in the search space 2 (the PDCCH candidate set 4). Optionally, two search spaces with an association relationship have the same period and/or the same slot duration. That is, it is assumed that the periods of the search space 1 and the search space 2 are the same, and the slot durations of which are both N slots. The first information then indicates that an i-th (where the i is less than or equal to N) PDCCH candidate set in the search space 1 is associated with an i-th PDCCH candidate set in the search space 2.

It should be noted that, in other period, the search space 1 includes PDCCH set 5 and PDCCH set 6, and the search space 2 includes PDCCH set 7 and PDCCH candidate set 8. In this period, for the association relationship between the search space 1 and the search space 2, reference can be made to the above description, which will not be repeated here.

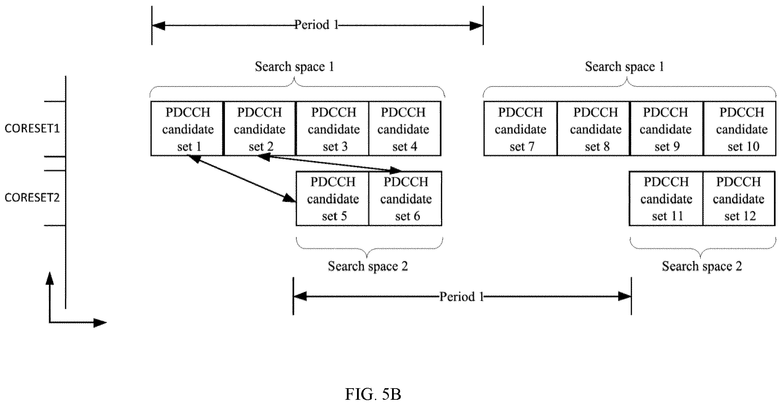

FIG. 5B is a schematic diagram of another search space provided by an embodiment of the present application. Please refer to FIG. 5B, the horizontal axis represents the time domain, and the vertical axis represents the frequency domain. Frequency domain resource set 1 (CORESET1) corresponds to search space 1, and frequency domain resource set 2 (CORESET2) corresponds to search space 2. The periods of the search space 1 and the search space 2 are the same, both of which are period 1. The slot duration of the search space 1 is different from the slot duration of the search space 2. The duration of the search space 1 is 4 slots, and the duration of the search space is 2 slots. In a period, the search space 1 includes PDCCH candidate set 1, PDCCH candidate set 2, PDCCH candidate set 3, and PDCCH candidate set 4, and the search space 2 includes PDCCH candidate set 5 and PDCCH candidate set 6. In this case, the first information indicates that a first PDCCH candidate set in the search space 1 (the PDCCH candidate set 1) is associated with a first PDCCH candidate set in the search space 2 (the PDCCH candidate set 5), and a second PDCCH candidate set in the search space 1 (the PDCCH candidate set 2) is associated with a second PDCCH candidate set in the search space 2 (the PDCCH candidate set 6). That is, it is assumed that the periods of the search space 1 and the search space 2 are the same, the slot duration of the search space 1 is M1 slots, and the slot duration of the search space 2 is M2 slots, the association relationship then will only exist between an i-th PDCCH candidate set (where the i is less than or equal to min (M1, M2)) in the search space and an i-th PDCCH candidate set in the search space 2. Min(x, y) represents the minimum of x and y.

It should be noted that, in other period, the search space 1 includes PDCCH set 7 to PDCCH set 10, and the search space 2 includes PDCCH set 11 and PDCCH candidate set 12. In this period, the association relationship between the search space 1 and the search space 2 can be referred to the above description, which will not be repeated here.

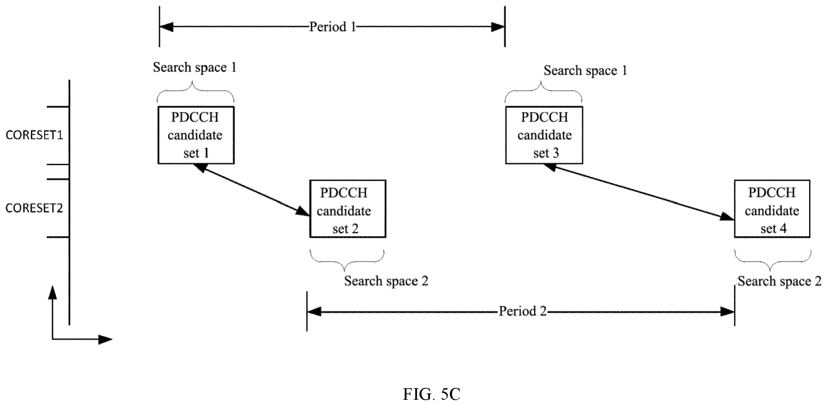

Optionally, when the period of the first search space is different from the period of the second search space, and in a period, a search space includes a PDCCH candidate set, the first information is used to indicate that there is an association relationship between a first PDCCH candidate set in the first search space and a second PDCCH candidate set in the second search space. In the time domain, the second PDCCH candidate set is a PDCCH candidate set closest to the first PDCCH candidate set after the first PDCCH candidate set. Description will be given below combined with FIG. 5C.

FIG. 5C is a schematic diagram of another search space provided by an embodiment of the present application. Please refer to FIG. 5C, the horizontal axis represents the time domain, and the vertical axis represents the frequency domain. Frequency domain resource set 1 (CORESET1) corresponds to search space 1, and frequency domain resource set 2 (CORESET2) corresponds to search space 2. A period of the search space 1 is different from a period of the search space 2, the period of the search space 1 is period 1, and the period of the search space 2 is period 2. A period of the search space 1 and a period of the search space 2 have a specific relationship in the time domain. The specific relationship may be that the two periods are adjacent in time. For example, a period of the search space 2 may be a period of the search space 2 closest to a period of the search space 1 and after the period of the search space 1, or a period of the search space 2 may be a period of the search space 2 closest to a period of the search space 1 and before the period of the search space 1. The search space 1 and the search space 2 have the same slot duration, both are 1 slot. In a period of the search space 1, the search space 1 includes PDCCH candidate set 1, and in a period of the search space 2, the search space 2 includes PDCCH candidate set 2. In another period of the search space 1, the search space 1 includes PDCCH candidate set 3, and in another period of the search space 2, the search space 2 includes PDCCH candidate set 4. In this case, the first information indicates that the PDCCH candidate set 1 is associated with the PDCCH candidate set 2, and that the PDCCH candidate set 3 is associated with the PDCCH candidate set 4.

When the period of the first search space is different from the period of the second search space, and the slot duration of the first search space is different from the slot duration of the second search space, the association relationship indicated by the first indication information then can be referred to FIG. 5A-FIG. 5C, which will not be repeated here.

In the search space shown in any embodiment of FIG. 5A-FIG. 5C, the first information may also indicate the association relationship between the PDCCHs in the PDCCH candidate set with the association relationship, which can be referred to the examples shown in Table 8-Table 9 and will not be repeated here.

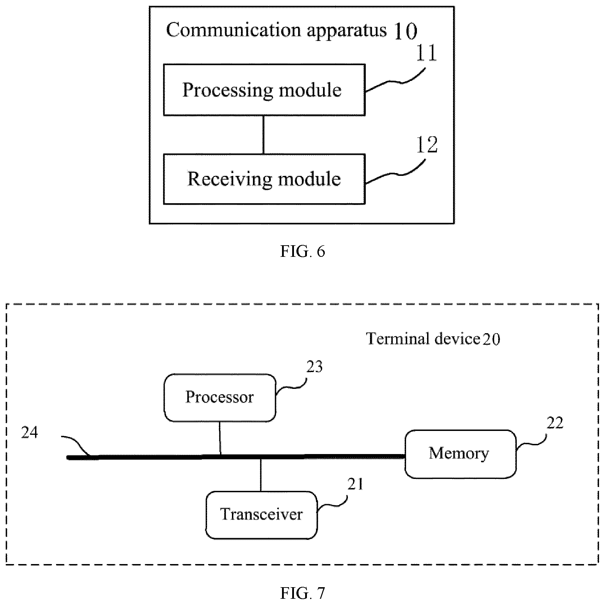

FIG. 6 is a schematic structural diagram of a communication apparatus provided by an embodiment of the present application. The communication apparatus 10 may be provided in a terminal device. Please refer to FIG. 6, the communication apparatus 10 may include a processing module 11 and a receiving module 12, where,
the processing module 11 is configured to acquire first information, where the first information is used to indicate an association relationship of physical downlink control channels (PDCCH) transmitted by N transmission-reception points, and the N is an integer greater than or equal to 2;
the receiving module 12 is configured to receive the PDCCHs based on the first information.

The communication apparatus provided in the embodiment of the present application can be used to implement the technical solutions of the above method embodiments, and the implementation principles and technical effects thereof are similar, which will not be repeated here.

In a possible implementation, the first information is used to indicate at least one of the following information:
an association relationship between different search spaces; or,
an association relationship between different PDCCH candidate sets; or,
an association relationship between different PDCCH candidates.

In a possible implementation, the N transmission-reception points correspond to a same frequency domain resource set, and different transmission-reception points correspond to different PDCCH candidate sets; and
the first information is used to indicate an association relationship between different PDCCH candidate sets.

In a possible implementation, the N transmission-reception points include a first transmission-reception point and a second transmission-reception point, the first transmission-reception point corresponds to a first PDCCH candidate set, and the second transmission-reception point corresponds to a second PDCCH candidate set;
the first information is used to indicate an association relationship between the first PDCCH candidate set and the second PDCCH candidate set.

In a possible implementation, the first information is used to indicate that there is an association relationship between an i-th PDCCH in the first PDCCH candidate set and an i-th PDCCH in the second PDCCH candidate set;
where, the i is less than or equal to a number of PDCCHs included in the first PDCCH candidate set, and the i is less than or equal to a number of PDCCHs included in the second PDCCH candidate set.

In a possible implementation, the N transmission-reception points correspond to a same frequency domain resource set;
the first information is used to indicate that there is an association relationship between different PDCCH candidates in a same aggregation level.

In a possible implementation, multiple search spaces correspond to a same frequency domain resource set;
the first information is used to indicate that there is an association relationship between PDCCHs in at least two search spaces.

In a possible implementation, the multiple search spaces include a first search space and a second search space, the first search space includes *M*₁ PDCCH candidate sets in a period, the second search space includes *M*₂ PDCCH candidate sets in a period;
the first information is used to indicate that there is an association relationship between an i-th PDCCH candidate set in the first search space and an i-th PDCCH candidate set in the second search space, i ≤ *M*₁, and i ≤ *M*₂.

In a possible implementation, in time domain, the *M*₁ PDCCH candidate sets are arranged sequentially, and the *M*₂ PDCCH candidate sets are arranged sequentially.

In a possible implementation, one search space is associated with at least two frequency domain resource sets;
the first information is used to indicate that there is an association relationship between PDCCHs corresponding to the at least two frequency domain resource sets.

In a possible implementation, different control resource sets (CORESET) are frequency division multiplexing (FDM); the at least two frequency domain resource sets include a first frequency domain resource set and a second frequency domain resource set, where the first frequency domain resource set corresponds to a first PDCCH candidate set, and the second frequency domain resource set corresponds to a second PDCCH candidate set; and
the first information is used to indicate that there is an association relationship between PDCCH candidates in the first PDCCH candidate set and PDCCH candidates in the second PDCCH candidate set.

In a possible implementation, the first information is used to indicate that there is an association relationship between an i-th PDCCH candidate in the first PDCCH candidate set and an i-th PDCCH candidate in the second PDCCH candidate set, the i is a positive integer less than or equal to P, and the P is a number of PDCCH candidates included in the search space.

In a possible implementation, the first PDCCH candidate set includes Q first PDCCH candidate sub-sets, and the second PDCCH candidate set includes Q second PDCCH candidate sub-sets; and
the first information is used to indicate that there is an association relationship between an i-th first PDCCH candidate sub-set in the first PDCCH candidate set and an i-th second PDCCH candidate sub-set in the second PDCCH candidate set.

In a possible implementation, the at least two frequency domain resource sets include a first frequency domain resource set and a second frequency domain resource set, the first frequency domain resource set corresponds to T first PDCCH candidate sets, the second frequency domain resource set corresponds to T second PDCCH candidate sets, and the T is an integer greater than or equal to 1; and
the first information is used to indicate that there is an association relationship between an i-th first PDCCH candidate set in the T first PDCCH candidate sets and an i-th second PDCCH candidate set in the T second PDCCH candidate sets, and the i is a positive integer less than or equal to the T.

In a possible implementation, the i-th first PDCCH candidate set includes S PDCCH candidates, and the i-th second PDCCH candidate set includes S PDCCH candidates, the S is an integer greater than or equal to 1; and
the first information is further used to indicate that there is an association relationship between a j-th PDCCH candidate in the i-th first PDCCH candidate set and a j-th PDCCH candidate in the i-th second PDCCH candidate set, and the j is an integer less than or equal to the S.

In a possible implementation, a first search space is associated with a first frequency domain resource set, and a second search space is associated with a second frequency domain resource set; and
the first information is used to indicate that there is an association relationship between PDCCH candidates in the first search space and PDCCH candidates in the second search space.

In a possible implementation, a period of the first search space includes *K*₁ PDCCH candidate sets, a period of the second search space includes *K*₂ PDCCH candidate sets, the *K*₁ is an integer greater than or equal to 1, and the *K*₂ is an integer greater than or equal to 1; and
the first information is used to indicate that there is an association relationship between an i-th PDCCH candidate set in the *K*₁ PDCCH candidate sets and an i-th PDCCH candidate set in the *K*₂ PDCCH candidate sets, i ≤ *K*₁, and i ≤ *K*₂.

In a possible implementation, in time domain, the *K*₁ PDCCH candidate sets are arranged sequentially, and the *K*₂ PDCCH candidate sets are arranged sequentially.

In a possible implementation, the first information is used to indicate that there is an association relationship between a first PDCCH candidate set in the first search space and a second PDCCH candidate set in the second search space; and
where, in time domain, the second PDCCH candidate set is a PDCCH candidate set closest to the first PDCCH candidate set and after the first PDCCH candidate set.

FIG. 7 is a schematic structural diagram of a terminal device provided by an embodiment of the present application. Please refer to FIG. 7, the terminal device 20 may include: a transceiver 21, a memory 22, and a processor 23. The transceiver 21 may include: a transmitter and/or a receiver. The transmitter may also be called a sender, a transmitting machine, a sending port, or a sending interface, or similar descriptions, and the receiver may also be called an acceptor, a receiving machine, a receiving port, or a receiving interface, or similar descriptions. Illustratively, the transceiver 21, the memory 22, and the processor 23 are connected to each other through a bus 24.

The memory 22 is configured to store a program instruction;
the processor 23 is configured to execute the program instruction stored in the memory, so as to enable the terminal device 20 to execute any communication method shown in any one of the above;
the transceiver 21 is configured to perform the transmission-reception function of the terminal device 20 in the above communication method.

An embodiment of the present application provides a computer-readable storage medium, where the computer-readable storage medium stores a computer-executable instruction thereon, and the computer-executable instruction, when executed by a processor, implements the above communication methods.

An embodiment of the present application may further provide a computer program product, where the computer program product may be executed by a processor, and when the computer program product is executed, any communication method performed by the terminal device shown above may be implemented.

The terminal device, the computer-readable storage medium, and the computer program product in the embodiments of the present application can execute the communication method performed by the above-mentioned terminal device. The specific implementation process and beneficial effects can be referred to the above, which will not be repeated here. All or part of the steps for implementing the above method embodiments can be completed by hardware related to program instructions. The aforementioned program can be stored in a readable memory. When the program is executed, the steps including the above-mentioned method embodiments are implemented. The aforementioned memory (storage medium) includes: a read-only memory (English: read-only memory, abbreviation: ROM), a RAM, a flash memory, a hard disk, a solid state disk, a magnetic tape (English: magnetic tape), a floppy disk (English: floppy disk), an optical disc (English: optical disc) and any combination thereof.

The embodiments of the present application are described with reference to flowcharts and/or block diagrams of methods, devices (systems), and computer program products according to the embodiments of the present application. It should be understood that each procedure and/or block in the flowchart and/or block diagrams, and combinations of procedures and/or blocks in the flowchart and/or block diagrams can be implemented by the computer program instruction. These computer program instruction may be provided to a processing unit of a general-purpose computer, a specialized computer, an embedded processor, or other programmable data processing device to produce a machine, such that an apparatus for implementing a function specified in one or more procedures of the flowchart and/or one or more blocks of the block diagram is produced via the instructions executed by the processing unit of the computer or other programmable data processing device.

These computer program instruction may also be stored in a computer-readable memory capable of directing a computer or other programmable data processing device to operate in a specific manner, such that the instructions stored in the computer-readable memory produce a manufacturing product including an instruction apparatus, where the instruction apparatus realizes the function specified in one or more procedures of the flow chart and/or one or more blocks of the block diagram.

These computer program instructions may also be loaded onto a computer or other programmable data processing device, such that a series of operational steps may be performed on the computer or other programmable device to produce the computer-implemented processing. Therefore, the instructions executed on the computer or other programmable device provide steps for implementing the functions specified in one or more procedures of the flowchart and/or one or more blocks of the block diagram.

Obviously, those skilled in the art can make various modifications and variations of the embodiments of the present application without going beyond the spirit and scope of the present application. In this way, if these modifications and variations of the embodiments of the present application fall within the scope of the claims of the present application and equivalent technologies thereof, the present application is also intended to include these modifications and variations.

In the present application, the term "include" and its variants may refer to non-limiting inclusion, and the term "or" and its variants may refer to "and/or". The terms "first", "second", etc. in the present application are used to distinguish similar objects, and not necessarily used to describe a particular order or sequence. In the present application, "multiple" refers to two or more than two. The term "and/or" is an association relationship describing associated objects, and represents that there may be three relationships. For example, A and/or B may represent three situations: presence of A only, presence of both A and B, and presence of B only. The character "/" herein generally represents an "or" relationship between contextual objects.

## Claims

1. A communication method, comprising:
acquiring, by a terminal device, first information, wherein the first information is used to indicate an association relationship of physical downlink control channels (PDCCH) transmitted by N transmission-reception points, and the N is an integer greater than or equal to 2;
receiving, by the terminal device, the PDCCHs based on the first information.

2. The method according to claim 1, wherein the first information is used to indicate at least one of the following information:
an association relationship between different search spaces; or,
an association relationship between different PDCCH candidate sets; or,
an association relationship between different PDCCH candidates.

3. The method according to claim 1 or 2, wherein the N transmission-reception points correspond to a same frequency domain resource set, and different transmission-reception points correspond to different PDCCH candidate sets;
the first information is used to indicate an association relationship between different PDCCH candidate sets.

4. The method according to claim 3, wherein the N transmission-reception points comprise a first transmission-reception point and a second transmission-reception point; the first transmission-reception point corresponds to a first PDCCH candidate set, and the second transmission-reception point corresponds to a second PDCCH candidate set;
the first information is used to indicate an association relationship between the first PDCCH candidate set and the second PDCCH candidate set.

5. The method according to claim 4, wherein the first information is used to indicate an association relationship between an i-th PDCCH in the first PDCCH candidate set and an i-th PDCCH in the second PDCCH candidate set;
wherein the i is less than or equal to a number of PDCCHs comprised in the first PDCCH candidate set, and the i is less than or equal to a number of PDCCHs comprised in the second PDCCH candidate set.

6. The method according to claim 1 or 2, wherein the N transmission-reception points correspond to a same frequency domain resource set;
the first information is used to indicate an association relationship between different PDCCH candidates in a same aggregation level.

7. The method according to claim 1 or 2, wherein multiple search spaces correspond to a same frequency domain resource set;
the first information is used to indicate an association relationship between PDCCHs in at least two search spaces.

8. The method according to claim 7, wherein the multiple search spaces comprise a first search space and a second search space, the first search space comprises *M*₁ PDCCH candidate sets in a period, the second search space comprises *M*₂ PDCCH candidate sets in a period;
the first information is used to indicate an association relationship between an i-th PDCCH candidate set in the first search space and an i-th PDCCH candidate set in the second search space, i ≤ *M*₁, and i ≤ *M*₂.

9. The method according to claim 7 or 8, wherein, in time domain, the *M*₁ PDCCH candidate sets are arranged sequentially, and the *M*₂ PDCCH candidate sets are arranged sequentially.

10. The method according to claim 1 or 2, wherein one search space is associated with at least two frequency domain resource sets;
the first information is used to indicate an association relationship between PDCCHs corresponding to the at least two frequency domain resource sets.

11. The method according to claim 10, wherein different control resource sets (CORESET) are frequency division multiplexing (FDM); the at least two frequency domain resource sets comprise a first frequency domain resource set and a second frequency domain resource set, the first frequency domain resource set corresponds to a first PDCCH candidate set, and the second frequency domain resource set corresponds to a second PDCCH candidate set;
the first information is used to indicate an association relationship between PDCCH candidates in the first PDCCH candidate set and PDCCH candidates in the second PDCCH candidate set.

12. The method according to claim 11, wherein the first information is used to indicate an association relationship between an i-th PDCCH candidate in the first PDCCH candidate set and an i-th PDCCH candidate in the second PDCCH candidate set, the i is a positive integer less than or equal to P, and the P is a number of PDCCH candidates comprised in the search space.

13. The method according to claim 11, wherein the first PDCCH candidate set comprises Q first PDCCH candidate sub-sets, and the second PDCCH candidate set comprises Q second PDCCH candidate sub-sets;
the first information is used to indicate an association relationship between an i-th first PDCCH candidate sub-set in the first PDCCH candidate set and an i-th second PDCCH candidate sub-set in the second PDCCH candidate set.

14. The method according to claim 10, wherein the at least two frequency domain resource sets comprise a first frequency domain resource set and a second frequency domain resource set, the first frequency domain resource set corresponds to T first PDCCH candidate sets, the second frequency domain resource set corresponds to T second PDCCH candidate sets, and the T is an integer greater than or equal to 1;
the first information is used to indicate an association relationship between an i-th first PDCCH candidate set in the T first PDCCH candidate sets and an i-th second PDCCH candidate set in the T second PDCCH candidate sets, and the i is a positive integer less than or equal to the T.

15. The method according to claim 14, wherein the i-th first PDCCH candidate set comprises S PDCCH candidates, and the i-th second PDCCH candidate set comprises S PDCCH candidates, the S is an integer greater than or equal to 1;
the first information is further used to indicate an association relationship between a j-th PDCCH candidate in the i-th first PDCCH candidate set and a j-th PDCCH candidate in the i-th second PDCCH candidate set, and the j is an integer less than or equal to the S.

16. The method according to claim 1 or 2, wherein a first search space is associated with a first frequency domain resource set, and a second search space is associated with a second frequency domain resource set;
the first information is used to indicate an association relationship between PDCCH candidates in the first search space and PDCCH candidates in the second search space.

17. The method according to claim 16, wherein a period of the first search space comprises *K*₁ PDCCH candidate sets, a period of the second search space comprises *K*₂ PDCCH candidate sets, the *K*₁ is an integer greater than or equal to 1, and the *K*₂ is an integer greater than or equal to 1;
the first information is used to indicate an association relationship between an i-th PDCCH candidate set in the *K*₁ PDCCH candidate sets and an i-th PDCCH candidate set in the *K*₂ PDCCH candidate sets, i ≤ *K*₁, and i ≤ *K*₂.

18. The method according to claim 17, wherein, in time domain, the *K*₁ PDCCH candidate sets are arranged sequentially, and the *K*₂ PDCCH candidate sets are arranged sequentially.

19. The method according to claim 16, wherein the first information is used to indicate an association relationship between a first PDCCH candidate set in the first search space and a second PDCCH candidate set in the second search space;
wherein, in time domain, the second PDCCH candidate set is a PDCCH candidate set closest to the first PDCCH candidate set and after the first PDCCH candidate set.

20. A communication apparatus, comprising a processing module and a receiving module, wherein,
the processing module is configured to acquire first information, wherein the first information is used to indicate an association relationship of physical downlink control channels (PDCCH) transmitted by N transmission-reception points, and the N is an integer greater than or equal to 2;
the receiving module is configured to receive the PDCCHs based on the first information.

21. A terminal device, comprising: a transceiver, a processor, and a memory;
wherein the memory stores a computer-executable instruction;
the processor executes the computer-executable instruction stored in the memory, so that the processor executes the communication method according to any one of claims 1 to 19.

22. A computer-readable storage medium, wherein the computer-readable storage medium stores a computer-executable instruction thereon, and the computer-executable instruction, when executed by a processor, implements the communication method according to any one of claims 1 to 19.

23. A computer program product, comprising a computer program which, when executed by a processor, implements the communication method according to any one of claims 1 to 19.
